# EUROPEAN PATENT SPECIFICATION

(11) **EP 1 269 667 B1**
(45) Date of publication and mention of the grant of the patent: **31.05.2006**
(21) Application number: 01909966.2
(22) Date of filing: 28.02.2001
(51) Int. Cl.: H04H 1/00, H04H 9/00, H04N 7/16, H04L 29/06, G09B 5/06

(54) **PRESENTING PROGRAMS**
DARSTELLUNG VON PROGRAMMEN
PR SENTATION DE PROGRAMMES

(30) Priority: 01.03.2000 GB 0005018; 12.06.2000 GB 0014320; 24.10.2000 US 694365
(43) Date of publication of application: 02.01.2003
(73) Proprietor: Hookham-Miller, Peter Ernest, London EC2Y 5BN (GB)
(72) Inventor: Hookham-Miller, Peter Ernest, London EC2Y 5BN (GB)
(74) Representative: Ruuskanen, Juha-Pekka
(86) International application number: PCT/GB2001/000857
(87) International publication number: WO 2001/065743

(56) References cited:
- WO-A-99/00979
- US-A- 5 191 615
- US-A- 5 733 131
- US-A- 5 945 988

## Description

The present invention relates to presentation of programmes, and in particular, but not exclusively, to provision of further content and/or interactivity for users of program presentation terminals by means of a data communication system.

Broadcasting systems for transmitting programs, such as TV or radio programmes, to be represented by a receiver apparatus to the users ("audience") thereof are known. For example, the skilled person is aware of the basic principle and operation of a television program broadcasting system and the concept of displaying television programmes to the viewers of television sets, and therefore the operation thereof will not be explained in detail. It is sufficient to note that the broadcasting systems include systems that are based on wireless program signal transmission, satellite transmission and cable transmission and so on and that the program signal transmission may comprise transmission of analogue or digital signals and/or a combination of these.

The programmes may be transmitted as live transmissions or as recorded programmes. The live transmissions show an event, such as a football game, news or a lottery draw, substantially in real-time for the viewers. The recorded programmes have been prepared beforehand and will be transmitted and shown later on to the viewers at an appropriate time. Recorded programs may also be represented from a storage media, such as video or audio tape, compact disk (CD) or digital video disk (DVD) e.g. by means of a video player, video disk or CD player or a tape player. The recording may contain a program that has been broadcast earlier or a recording that has been prepared to be distributed e.g. through video shops or record stores.

The programmes can also be divided in several categories, such as news, sport, game shows, entertainment programs, comedies, drama series, movies, children programmes, educational programmes, documentaries, and so on. For example, the purpose of the educational programmes is to help the viewers thereof to learn new things and to develop their knowledge and/or skills. The educational programmes may be viewed by various groups of people, such as small children or schoolchildren, students, adults, or anybody else wishing to learn new things. The game shows may include, for example, entertainment games with no prices or only modest prices and gambling, such as lottery or betting.

Programmes, such as documentaries, educational programmes and/or game shows, may include various stimulating features or events, such as questions to be answered or special tasks to be performed by the viewers or listeners or other events to which the remote audience may wish to give feedback or from which the viewers may wish to receive more information. Individuals watching dramas or comedies might wish to have influence over the story and/or the end of the story. People watching documentaries may wish to receive some further information of the facts and/or background and so on.

It is believed that interactivity may make the programmes in general more interesting and/or increase the efficiency of the educational programmes. For example, the viewer of a TV program may wish to have the possibility to respond to questions, events or other stimulating features of the programmes they are currently viewing. The conventional one-way broadbasting systems, however, may not be able to provide feasible, easy-to-use and affordable interactivity to as the remote audience might wish to have.

The viewer (or listener) may also wish to receive further content that associates with the program he is viewing. The content could be any associating information such as further information of the events or characters of the program, background information, information of the rules of a game that is to be presented and so on. The further content could also comprise views from another angle(s), replay of certain events, additional views or parts of the program not presented by the broadcasting system and so on.

US 5 733 131 describes a system for activating a device, such as a toy bear doll, in correspondence with topics presented in a television program.

WO99/00979 discloses a method for encoding control data for a children's entertainment product into the horizontal overscan area of a video signal.

The previous proposals have suggested use of public switched telecommunication networks (PSTN) or other conventional telephone networks for interaction with the program. In accordance with the earlier proposals the viewer or listener needs to have a telephone in order to make a telephone call to the television studio. The viewer may also contact the studio through a personal computer (PC) connected to the Internet to give his answer or give some other feedback or to fetch further information. The broadcasting systems in general may not have been enabled to provide any tailored communication towards selected users other than by a telephone (or Internet) call between the viewer and e.g. the presenter of the program through the public telephone network. Some viewers may find it inconvenient to make a call to a particular number provided by the program. Although the Internet may be used for the communication, not everyone has a home PC that is connected to the Internet. A percentage of people may also find the PCs and Internet subscriptions too expensive and/or difficult to install and/or use and/or operate.

The previous proposals may thus not have been able to deliver a cost-effective solution for interaction with the broadcasting system, such as for interactive learning or for game shows or for fetching further content that associates with the program. This has been held back by lack of solutions offering an affordable and workable solution for providing a communication channel towards the broadcasting system or any other source of further content. The present proposals may not be able to provide personalised interactivity and/or further content to individual users in a satisfactory manner.

The users may also wish to have mobility while viewing or listening to the program. The mobility may be restricted by a wired connection between a terminal that may be used for the interactive communication and the telecommunication system. Furthermore, the present arrangements may also provide only limited possibilities for providing interactivity and/or further content in association with recorded programs.

The embodiments of the present invention aim to address one or several of the above problems. The specific embodiments aim to provide tailored interactivity and/or further content to the users of a conventional program representation system by means of a user device that may communicate via a different communication media than what is used for the provision of the programs.

According to one aspect of the present invention there is provided a method for presenting a program according to claim 1.

Embodiments of the invention are defined in the sub claims 2 to 22.

The embodiments of the invention may provide a cost effective way for enabling e.g. the viewer of a TV programme to interact with it and/or to receive further content and associated information that associates with the program. No apparatus may be required to be provided at the premises where the program is experienced for the provision of linking and or synchronisation between the program and the preferably two-way communication by the user. The embodiments may thus enable an easy and/or affordable interaction with a program. The embodiments may be used in any home today with the existing television or radio receiver sets. The embodiments may make programs that are based on interactive learning and/or children programs and/or gaming programs and the like more interesting for the viewers. The embodiment may also enable more feasible and affordable real-time communication between the users and the program service providers than in the conventional solutions.

For better understanding of the present invention, reference will now be made by way of example to the accompanying drawings in which:
Figure 1 shows a system for carrying out a method according to one embodiment of the present invention;
Figure 2 is a flowchart illustrating an embodiment of the present invention;
Figure 3 and Figure 4 show further apparatus for carrying out a method according to an embodiment of the present invention;
Figure 5 shows an architecture for a management unit for a method in accordance with an embodiment of the present invention; and
Figure 6 is an example of an information record stored in the management unit of Figure 5.

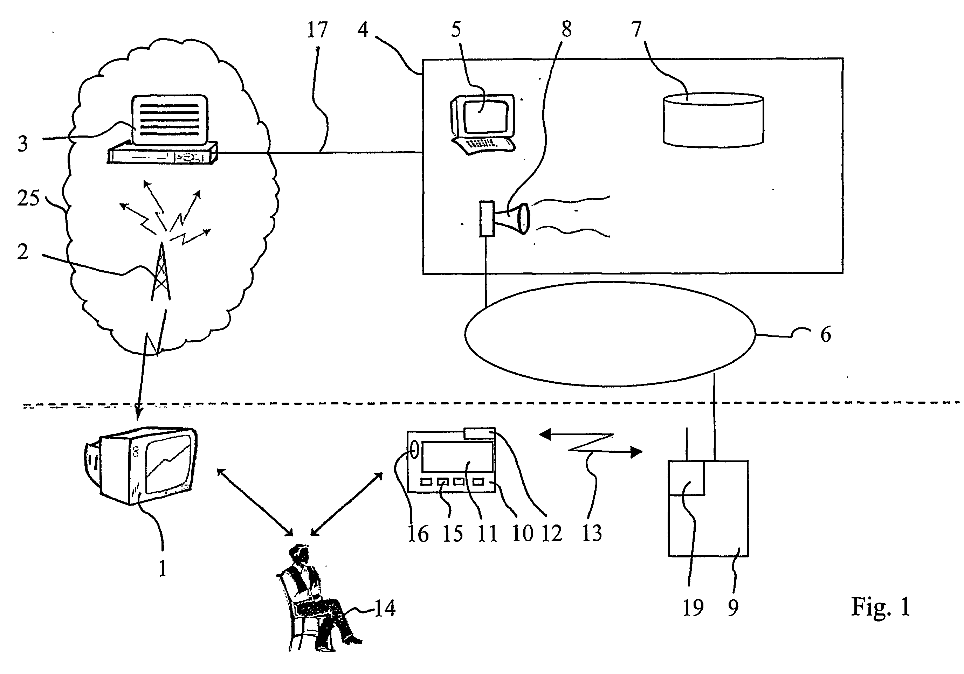

Reference is made to Figure 1 which shows a system for carrying out a method of an embodiment of the present invention that relates to presentation of TV programs that are transmitted by means of a public television broadcast network 25. The television network 25 can be of any type, such as a conventional analogue network or a digital television network. The network 25 includes a wireless transmitter or antenna 2 for transmitting the television signal towards television apparatus 1. It should be appreciated that instead of distributing the television signal through antennae, the signal may be distributed through other media, such as cable or satellite subscriptions (not shown). It should also be appreciated that although only one antenna and TV set is shown for clarity reasons, the number of the antennae and TV sets connected to the TV network is typically much higher.

The television network system is also provided with a broadcasting apparatus 3 for the provision of the TV program signal to the antennae. It should be understood that the broadcasting apparatus typically includes various different elements in the TV studio and elsewhere in the television system. The apparatus that is required for the provision of the television program signal to the antenna 2 and the operation thereof is known and does not form a part of the invention as such, and will thus not be described in more detail.

The Figure 1 system includes further a data processing entity or management unit 4 comprising a processor facility 5 and storage means or database 7. The database 7 is provided for storing information on the individual users 14 of the system. That is, each of the users of the system is individually registered onto the management unit 4 so that a personalised experience may be tailored for each user based on the information stored in the database. The information stored in the database 7 is used e.g. to personalise communication towards individual users. For example, it is used to personalise additional content that associates with a particular program, e.g. such that different viewers with different interests will receive different additional content.

The database 7 or a separate database is also preferably used for storing information that associates with the programs, such as additional content or background information. The management unit or 'hub' 4 may communicate via a connection 17 with one or several elements of the television system 25, although this is not a necessity in all embodiments.

The management unit 4 is connected to appropriate gateway apparatus 8 for enabling communication via a packet data communication network 6. For example, the management unit 4 may be provided with voice over IP (Internet Protocol) gateway apparatus for enabling voice communication via a packet switched Internet protocol (IP) based data network. The skilled person is familiar with various possible gateway arrangements for connecting a data processing entity to a data network, and therefore they are not discussed in more detail.

The management unit 4 is operated and run by an independent service provider providing interactivity and/or other content services.

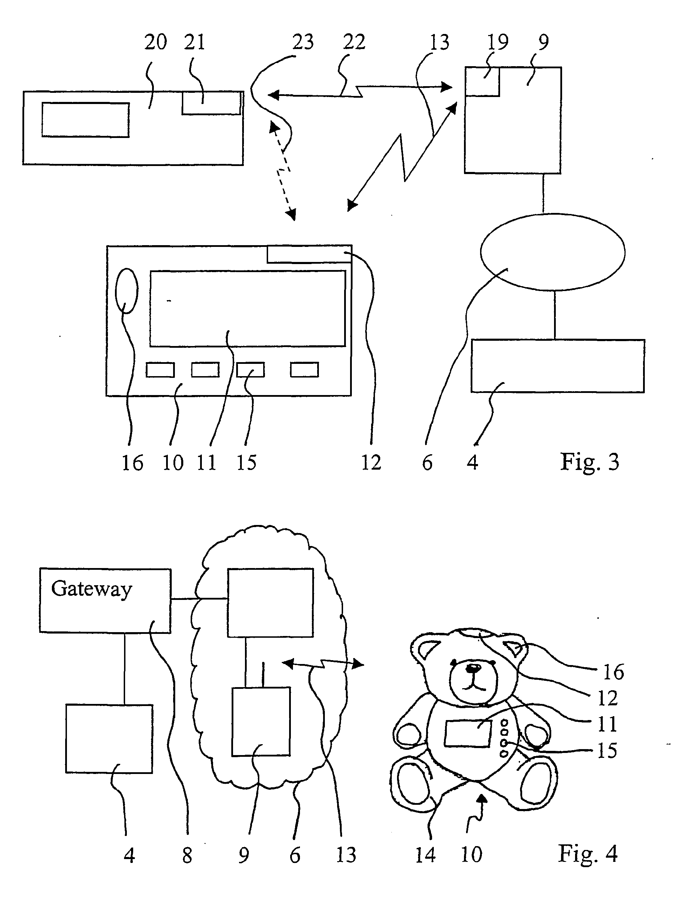

The data communications network 6 may comprise any network that is capable of providing data transportation services for the management unit 4. The communication system provides preferably broadband communication services for the subscribers thereof. The broadband services is preferably provided to home users through a data communication system that is based e.g. on one of the third generation (3G) telecommunications standards. Examples of the 3G standards will be discussed in more detail later with reference to Figure 4. The packet data network may also be based on technologies such as an integrated services digital network (ISDN) or an asynchronous data subscriber line (ADSL). A data communication system includes typically various elements, such as one or more network controllers, exchanges and/or routers (not shown for clarity reasons) and one or more gateways 8.

A home base station 9 is shown to be connected to the data communication network 6, and thus also to the management unit 4. The connection between the management unit 4 and the base station 9 may be based on any appropriate data transport protocol, such as the Internet Protocol (IP). The base station 9 is adapted to interface the data network 6 and one or several user devices in the location of the base station 9. The location can be e.g. a house, a suburban housing area or a block of flats.

The user 14 is provided with a portable user device. The user device may comprise a portable i.e. handheld on-site controller 10 that the user 14 may see and operate while watching the TV apparatus 1. The controller 10 provides an interactive remote station that may communicate over a wireless interface 13 with the base station 9. To enable this, the controller 10 of Figure 1 is provided with a radio communication module 12 that is enabled to have a wireless high speed data connection with the base station 9. Thus the data network 6 and the base station 9 are enabled to provide broadband communication between the management unit 4 and the portable controller 10.

In case a public data communication network that provides wireless services for the user thereof is used, the user device 10 may be adapted to communicate directly with a base station of the data network. This embodiment will be described in more detail with reference to Figure 4. Alternatively, the wireless link 13 between the controller 10 and the base station 9 may be based on a communication protocol that is capable of providing a local low power wireless service. The low power wireless service may be different from the standard and protocols of the data network 6. The low power wireless link may be provided by a short range radio link (SRRL) between any two or more stations that are close enough to each other. The short range low power wireless services operate typically in a unlicensed frequency range, such as in frequencies over 2 GHz. For example, in the USA unlicensed ISM bands 2.4 to 2.5. GHz and 5.725 to 5.875 GHz are permitted.

The controller 10 and the base station 9 are provided with appropriate wireless communication modules 12 and 19, respectively such that duplex traffic between the two stations is enabled. The wireless modules 12 and 19 are preferably based on standardised low power radio service components. It should be appreciated that although this description describes a base station comprising a wireless module, the base station 9 may in its simple form constitute of a wireless transmitter and/or receiver and means for interfacing the transmitter and/or receiver to the data network 6.

An appropriate low power wireless service that may be used in the embodiments is based on a so called Bluetooth^{™} protocol. The term Bluetooth^{™} refers to a technology specification by the Bluetooth special interest group (SIG) for small factor, low-cost, short range radio links (SRRL) between various devices, such as mobile stations, portable personal computers, and other portable devices. Bluetooth^{™} facilitates real-time voice and data transmissions. If the controller 10 is equipped and synchronised voice. The gross data rate of the present Bluetooth^{™} applications is 1MB per second. Each voice channel may support a 64 kb/s synchronous link. At present the asynchronous channel can support an asymmetric link of 721 kb/s in either direction while permitting 57.6 kb/s in the return direction, or a 432.6 kb/s symmetric link. A time division duplex scheme may be used for full duplex transmission. The network topology of the Bluetooth^{™} system may support both point-to-point and point-to-multipoint connections, thereby enabling communication between several devices at the same time.

The size of the Bluetooth^{™} wireless module is relatively small and typically comprises a single chip. A Bluetooth^{™} chip may comprise all necessary processors, radio part, interface means and so on. Since the chip is a standardised element, the implementation costs of the wireless controller 10 may be relatively low. The power consumption of a typical Bluetooth^{™} arrangement is also low. The fast frequency hopping scheme enables robust radio links between the controller 10 and the base station 9.

The controller 10 may be provided with voice input/output means 16 and/or various trigger sensors in the body thereof. A graphics display 11 and selection buttons 15 may also be provided in the controller. The display 11 may be adapted to show still images or video images that are based on signals received via the wireless transmission from the base station 9. The display 11 may also comprise a so called touch screen function. The controller 10 may be IP enabled. The controller 10 may have a customised application loaded into it.

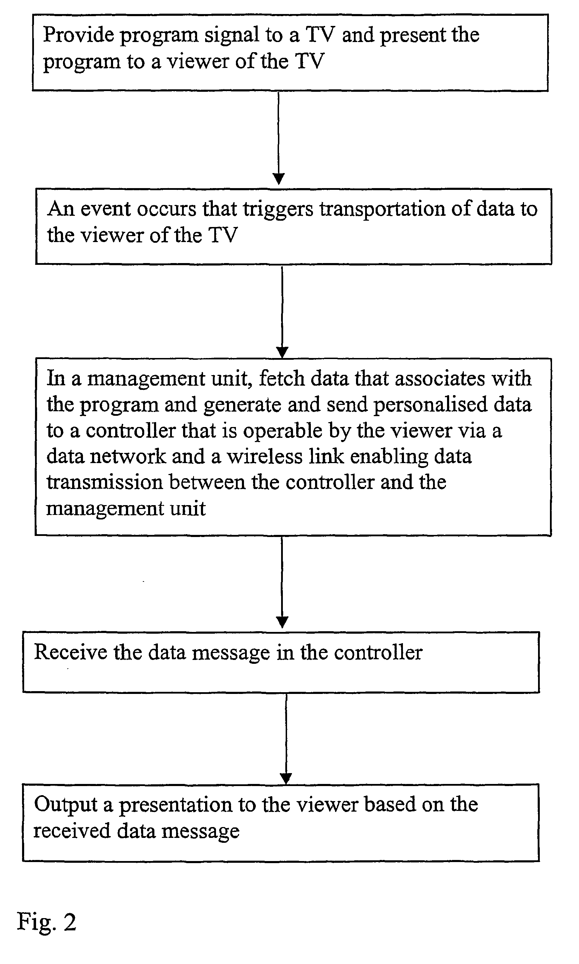

With reference now also to Figure 2, operation of an embodiment of the present invention is explained in more detail. The TV programme production company may create a program which make use of the interactive controller 10. The programme may be a recorded or live program and transmitted in a conventional fashion. The generation of messages to be communicated between the controller 10 and the management unit 4 associates with predetermined events in the production. According to a preferred embodiment a time-code of the film constitutes an event that triggers signalling from the management unit 4 towards the controller 10. The progression of the program can be followed and/or the time-code detected by the element 3 of the broadcasting system 25. The element 3 may be used to generate and transmit a request for the management unit 4 over the connection 17 to transmit data towards the controller 10. According to a possibility the the management unit 4 monitors for a predefined event, e.g. a predefined sound effect or visual effect in the program, and upon detection thereof initiates the data transmission. The sound effect detection or visual effect detection may be based on digital sound or image processing techniques. The triggering of the messaging may also be based on combination of several events, e.g. such that a time-code condition and a visual effect has to be met before any message is generated and/or transmitted or that it is enough that one event of several possible events is detected. The transmission of data from the management unit 4 may also be initiated upon receiving a request from the controller 10. The data that may be sent to the controller 10 may take, for example, the form of voice data, video data and control instruction data.

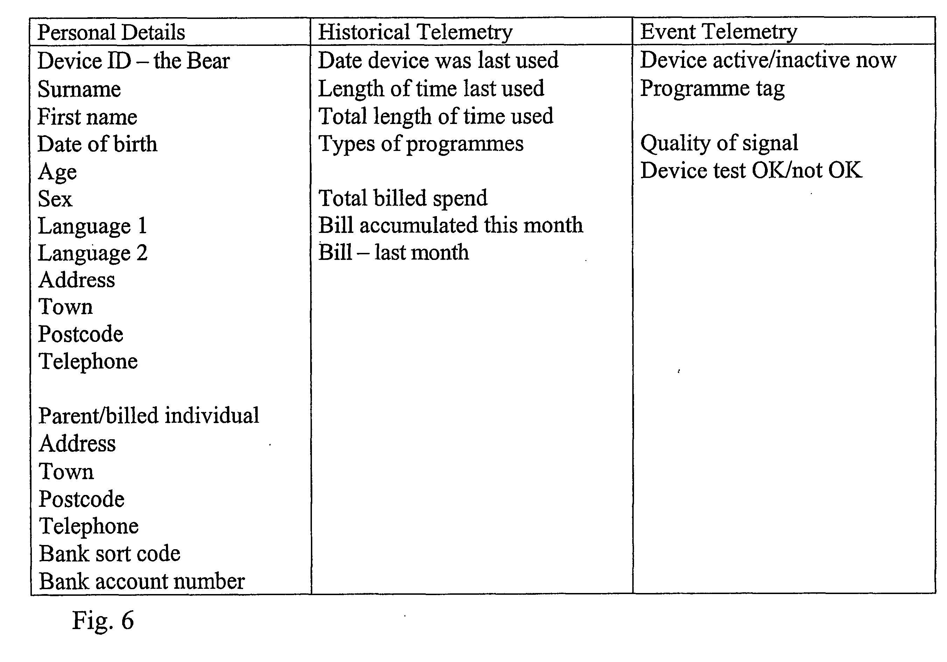

The user 14 receives personalised content from the management unit 4 and may thus be provided with an enhanced and tailored television viewing experience. Each user is personalised in the management unit or service provider portal based on information stored in the database 7 thereof. The personalised information may be obtained e.g. when a controller is purchased. The buyer may complete a registration form identifying the owner of the controller or the users of the controller (e.g. all members of a family). In this way, the controller and/or interaction can be personalised to each individual. Personal interests/preferences are used as part of the personalisation process. One or more of the following additional criteria may be used in addition as part of the personalisation process: first name; last name; date and/or place of birth; sex; colour of eyes; colour of hair; personal interests/preferences; hobbies; nationality; preferred language; address information; email address; telephone number; and so on. Even detailed health information, such as eyesight or information regarding difficulties in hearing, can be stored in the database, as this may additionally be used e.g. when providing programs to special groups. Figure 6 illustrates a possible listing of personal details stored in the management unit.

The personal information can also be submitted e.g. by post, Internet, (e.g. through Hyper Text Mark-up Language HTML pages), telephone or personal visit to the provider of the interactive services or by any other appropriate way. This information will be stored in the database 7 and the controller is personalised to each viewer based on the stored information. The stored data is used when predefined events in the program or a request by the controller trigger the procedure for data transmission to the controller.

The triggered message and personalisation data may be combined to form a "video event" or a "Sound Event". An example of the latter is a birthday song that is presented to a person on his/hers birthday. The generated event is sent to a gateway 8 where e.g. the sound file is converted using e.g. Voice Over IP protocol and transmitted over a data network 6 to the controller 10.

The user 14 may activate the controller 10 whilst watching a program. The user may input various information, such as his/hers identity, information regarding the channel he/she is watching and so on. This information may also be provided by the receiver apparatus, either via a connection with the controller 10 or base station 9. To enable the communication with the other devices in the household, the TV may be provided with a similar wireless module as the controller, or the communication may occur e.g. via a conventional infrared link. The controller may then generate and transmit a message to the management unit, and more particularly, to the processor 5 thereof. Based on the message from the controller 10 and/or information stored in the database 7, the processor 5 generates a content entity that is transported back to the controller and presented to the user 14 thereof.

According to an embodiment the controller is associated with a toy, such as a teddy bear 10 of Figure 4. It should be appreciated that in the following description any reference to Teddy 10 is also a reference to any portable on-site controller, whenever appropriate. When a toy, is not used as an interface towards the TV system, it can be played with in a normal manner. When a particular broadcast starts, the child may activate the toy e.g. by squeezing the toy's nose or by touching or pressing other predefined parts or activation means of the toy. The toy is activated, i.e. 'comes to life', and as the broadcast continues, the toy asks questions in relation to the broadcast. The child interacts with the program by sending responses through the Teddy (e.g. by pressing one or several of the buttons thereof, by touching an element of the toy given to him/her by the program or simply by speaking to the toy). The answers are verified by the management unit 4, and feedback is given to the child regarding the correctness of the answers.

Sound messages may be output by one or more speakers built into the Teddy (for example, in the mouth of the teddy bear). The sound message may be based on the signal fed by the VOIP conversion. A microphone may also be built into the Teddy (e.g. in one or both ears 16) allowing the child to talk back. The input may again be encoded using VoIP and transmitted back to the control system 4, where a speech recognition software could interpret what has been said. The control system 4 may then generate an appropriate response.

In accordance with a further embodiment the design of the controller 10 is such that mechanical movement of at least some parts thereof are enabled. This may affect the amount of battery power required, but also adds to the over-all design. For example, if the controller is in a form of a toy, e.g. the Teddy, movement of the mouth, eyes, head, limbs and ears of the toy are all possible. The movement may be controlled by the management unit 4 via the data network. For example, the movements of the various elements of the Teddy bear may follow the story of the program, or give feedback to the child based on the responses he/she has given to the questions. It should be appreciated that a similar control instruction mechanism may be employed to control the operation of any controller and/or the various components thereof that may be employed when implementing the embodiments of the present invention.

Figure 4 shows a preferred alternative for the wireless data communication interface. In the Figure 4 embodiment the data network 6 comprises a network that is capable of providing wireless packet switched data communication services, such as a General Packet Radio Service GPRS network, EDGE (enhanced data rate for GSM evolution) Mobile Data Network or an appropriate third generation telecommunication system such as a CDMA (code division multiple access) or TDMA (time division multiple access) based 3^{rd} generation telecommunication systems referred to as Universal Mobile Telecommunication System (UMTS). The GPRS network is described in more detail for example in 3GPP technical specification 3G TS 23.060 "General Packet Radio Service (GPRS); Service Description; Stage 2", January 2000. A UMTS system that is based on a WCDMA (wideband code division multiple access) is described in more detail e.g. in UMTS related 3GPP technical specifications. Other suitable packet data telecommunication standards include, without limiting to these, IS-95, International Mobile Telecommunication System 2000 and i-Phone.

If the data communication is based on use of the public land line mobile networks (PLMN), then the base station 9 would be provided by means of a base station of the PLMN system instead of a short range radio link home base station of Figure 1. The controller 10 may be enabled to communicate directly with said PLMN base station 9. To enable this, the controller 10 may contain e.g. a GPRS transceiver module and an appropriate data processing unit, such as a Symbian EPOC micro-processor. The EPOC platform may be used because it supports Wireless Application Technology (WAP) and may be used with a Voice Over IP (VoIP) client. According to an alternative embodiment the short range radio link home base station is enabled to communicate with the base station of the PLMN systems.

Data rates up to 115kbit/s may be transmitted via the wireless interface in accordance with the present GPRS specifications, although the rate may be even more in the future applications. This enables wireless transmission of information at a speed that may be used in the embodiments. The introduction of GPRS (General Packet Radio Service) is one of the key steps in the evolution of today's 2^{nd} generation networks, such as the GSM (Global System for Mobile) to third generation systems, and the first commercial GPRS services are believed to be launched in near future. Following the arrival of GPRS, a further step in the bandwidth model is believed to occur with EDGE, with speeds of up to 384kbit/s being possible. The bandwidth potential of the 3^{rd} generation systems such as the UMTS or IMT 2000 (International Mobile Telecommunication System 2000) or IS-95 is in the first phase believed to be up to 2Mbit/s, and even more in the future. The inventor has found that the wireless packet switched services will enable the embodiments of the invention due to their capability of providing wireless high speed data connection that was not facilitated by the conventional circuit switched wireless connections.

An advantage of the packet switched services when compared to the conventional data services is that the packet switched service will always be available. The packet switched service are thus also referred to as connectionless services, as there will not be any communication circuits. Instead, each of the data packets is provided with an address and the individual packet are routed to the destination based on the address information. This means that the users are always connected and always on-line, and thus the management unit 4 will be easy and quick to access. Another benefit is that the user of the packet switched services may pay only for the content used and not the length of time connected. This enables a seamless access to a whole range of new and existing Internet Protocol (IP) based services. The viewers will be able to stay permanently logged-on to the interactive services and to send data to and to receive data the management unit with large file attachments in an instant. Since the viewers may be always connected and always on-line, the interactive services will be easy and quick to access and, with the capability to charge per data bit sent and received, customers will be able to pay only for the usage of the data transmission resources, e.g. per a data packet transmitted.

According to an embodiment, wireless application protocol (WAP) technology may be employed for the wireless transmission. For example, the display and selection buttons built into the controller 10 may also be based on the use of the wireless application protocol (WAP).

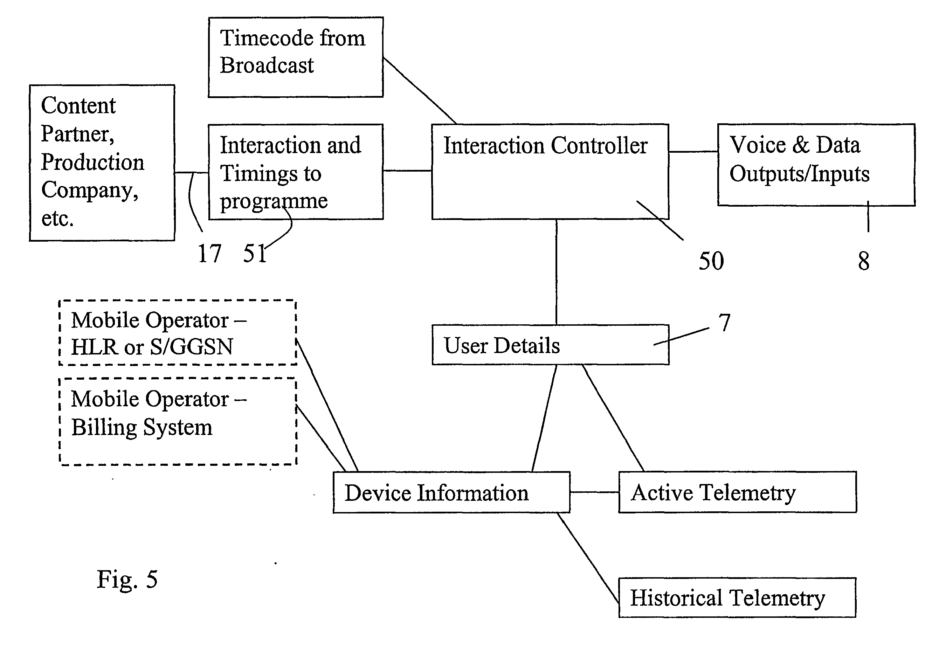

Figure 5 shows a possible architecture for the management unit. Interaction control function 50 controls interaction between a broadcasting system (via interface 17), a user device (via inputs/outputs 8) and a data base 7.

Information associated with the user and stored in a database of the management unit may be divided into a plurality of subcategories. Figure 6 shows a possibility for the division. More particularly, the information can be classified in categories such as personal details and user device information. The user device information may be divided further to historical telemetry and event telemetry.

The history information may comprise information such as the time when the device was last used and/or is typically used, length of time of the last and/or typical usage, total length of time used, types of programmes viewed and so on. Billing related information may also be stored, such as total billing, the bill accumulated for the present month, the bill for the last month/year and so on.

The event information i.e. active telemetry information may comprise e.g. the status of the user device, a programme tag, information associated with the quality of the signals and/or possible device tests.

The device information may be linked to elements of the provider of the data communication service used for communication towards the user device. For example, a communication may be provided between the management unit and a subscriber register (such as the home location register) or billing database of the operator.

Figure 5 shows also a function block 51 for interaction and timing with a program. Block 51 provides a function by means of which a content partner or production company can input the desired interaction script for their programme. The management unit may create and provide templates which will allow for non-technical persons to input this information using e.g. a WWW based graphical user interface. For example, the following fields may be included in an interaction and timings description entity for a program.
Main Fields: Programme ID (Each programme may retain a unique ID in the management unit); Scheduled Start Date; Scheduled Start Time; Event 1; Event 2; ...; Event N.

Each Event within the interaction may contain e.g. the following subfields:
Timing to Broadcast; Type (Data/Voice); Script; Expected Response (e.g. a Correct Answer); Out of Range Response (Incorrect Answer); Out of Range Script (a subscript allowing further interaction to allow the user to find the right answer).

The following is an example of interaction and timings based on use of the above fields:

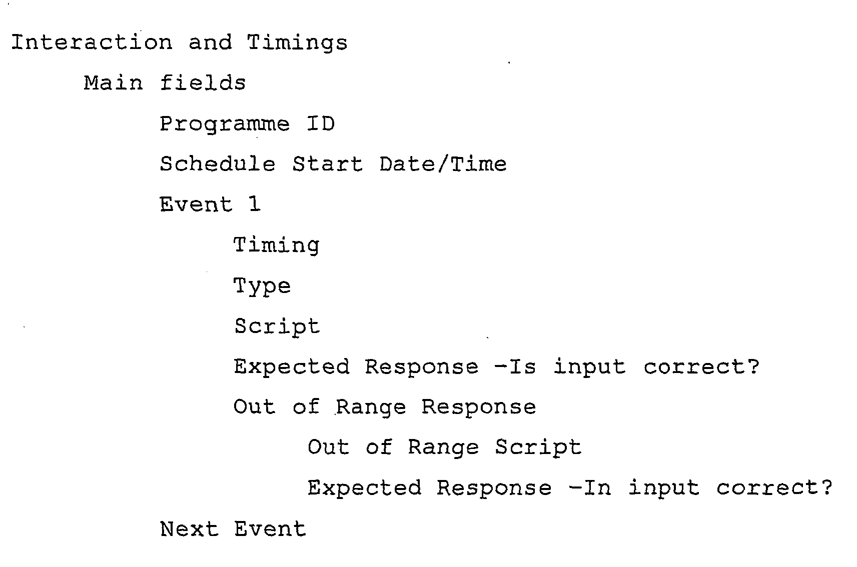

The user may also be able to customise the interactive service based e.g. on an HTML interface and a PC. In addition to receiving content and/or interacting with the programs, the user may also use the controller to other purposes, such as for ordering e.g. video-on-demand type services or goods/services offered by the broadcast program.

According to a further embodiment, the management unit 4 may be used for selective marketing towards the users of the system. For example, the unit 4 may trigger commercial or other content to be transported to a selected user based on the information of the user and also of the program he/she is currently viewing. A user who has registered as a fan of football club A would receive different information than a user who is registered as a club B fan, and so on.

According to a further embodiment, in addition to being an entertainer or an information provider, the user device may also be used as a companion or security device for the user thereof. The user device 10 may be adapted to be used as a reminder device under the control of the management unit 4. It may also comprise a "panic button" type function, which may be used e.g. by the elderly to get help. The panic button function may be activated by pressing a key or by a voice prompt.

It should be appreciated that whilst embodiments of the present invention have been described in relation to some specific types of programs and user equipment, embodiments of the present invention are applicable to any other suitable type of control equipment and programmes. For example, the programs may ask the viewers to express their opinion or give their vote in issues raised by the program.

It is also noted herein that while the above describes exemplifying embodiments of the invention, there are several variations and modifications which may be made to the disclosed solution without departing from the scope of the present invention as defined in the appended claims.

## Claims

1. A method for presenting a program for a user (14) comprising : storing personal information of individual users including personal interests/ preferences in a remote management unit (4) operated and run by an independent service provider, providing a program representation device (1) with a program signal, presenting the program to a user based on the program signal ; in response to a predefined event monitored for by the remote management unit transporting data between the remote management unit and a respective user device (10) operable by the user for inputting information while experiencing the program and generating and transmitting a message to the management unit;
the transportation ocurring over a data network (6) and a wireless data communication link (13) between the data network and the user device, wherein said data is associated with the program and transported from the remote management unit (4) to the user device (10) and said data is personalised based on said stored personal information for the respective user;
sending a response to the remote management unit via the user device; and giving feedback to the response to the respective user from the remote management unit.

2. A method as claimed in claim 1, wherein the user device (10) comprises a portable controller.

3. A method as claimed in claim 1 or claim 2, wherein the user device (10) processes data packets received from or to be transported to the management unit (6).

4. A method as claimed in any preceding claim, comprising a further step of storing data that associates with the program in the remote unit (6).

5. A method as claimed in any preceding claim, wherein a base station (9) interfaces the wireless data communication link (13) to the data network.

6. A method as claimed in any preceding claim, wherein the wireless link (13) comprises a short range radio link.

7. A method as claimed in any preceding claim, wherein the wireless link operates at a frequency band that is about 2.4 GHz.

8. A method as claimed in any preceding claim, comprising transportation of data packets.

9. A method as claimed in any preceding claim, wherein the wireless link (13) employs frequency hopping.

10. A method as claimed in claims 8 and 9, wherein the frequency used for the wireless link is changed between subsequent data packets of the packet data transmission.

11. A method as claimed in any preceding claim, wherein the wireless link is based on a universal short range radio link protocol defined by Bluetooth^{™} Special Interest Group.

12. A method as claimed in any preceding claim, wherein the data transported over the wireless link comprises control instructions for the user device (10).

13. A method as claimed in any preceding claim, wherein the user device (10) presents to the user an audio message based on data transported from the remote management unit.

14. A method as claimed in any preceding claim, wherein the user device (10) presents to the user a visual message based on data transported from the remote management unit.

15. A method as claimed in any preceding claim, wherein one or more questions or tasks are presented to the user by the user device (10) based on data transported from the remote management unit.

16. A method as claimed in any preceding claim, comprising transportation of voice messages based on the voice over internet protocol (VOIP).

17. A method as claimed in any preceding claim, wherein the data network (6) provides broadband data transportation services for the users thereof.

18. A method as claimed in any preceding claim, wherein the user (14) modifies said information stored in a database (7) of the remote management unit (4).

19. A method as claimed in any preceding claim, wherein information associated with usage of the user device is stored in the remote management unit.

20. A method as claimed in any preceding claim, wherein the user device associates with a toy.

21. A method as claimed in any preceding claim, wherein the program is one of the following selection: an educational program; a game show, a documentary; a news program; a sports program; an entertainment program; a comedy; a drama; a movie; a children program.

22. A method according to claim 1, wherein the program representation device is provided with the program signal by a program signal broadcasting system.

## Patentansprüche

1. Verfahren zum Darstellen eines Programms für einen Benutzer (14), mit:
Speichern von persönlichen Informationen von einzelnen Benutzern mit persönlichen Interessen/Vorlieben in einer Fernverwaltungseinheit (4), die von einem unabhängigen Dienstanbieter betrieben und bedient wird;
Versorgen einer Programmdarstellungseinrichtung (1) mit einem Programmsignal;
Darstellen des Programms für einen Benutzer basierend auf dem Programmsignal;
als Antwort auf ein vordefiniertes Ereignis, das von der Fernverwaltungseinheit überwacht wird, Transportieren von Daten zwischen der Fernverwaltungseinheit und einer entsprechenden Benutzereinrichtung (10), die betriebsfähig ist zum Eingeben von Informationen durch den Benutzer, während er das Programm wahrnimmt, und zum Erzeugen sowie Übertragen einer Nachricht an die Verwaltungseinheit;
wobei der Transport über ein Datennetzwerk (6) und eine drahtlose Datenkommunikationsverbindung (13) zwischen dem Datennetzwerk und der Benutzereinrichtung erfolgt, wobei die Daten mit dem Programm verknüpft sind und von der Fernverwaltungseinheit (4) an die Benutzereinrichtung (10) übertragen werden und die Daten basierend auf den gespeicherten persönlichen Informationen für den entsprechenden Benutzer personalisiert sind;
Senden einer Antwort über die Benutzereinrichtung an die Fernverwaltungseinheit; und
Geben einer Rückmeldung auf die Antwort von der Fernverwaltungseinheit an den entsprechenden Benutzer.

2. Verfahren gemäß Anspruch 1, wobei die Benutzereinrichtung (10) eine tragbare Steuerung aufweist.

3. Verfahren gemäß Anspruch 1 oder Anspruch 2, wobei die Benutzereinrichtung (10) Datenpakete verarbeitet, die von der Verwaltungseinheit (6) empfangen werden oder zu dieser zu transportieren sind.

4. Verfahren gemäß einem der vorstehenden Ansprüche, mit dem weiteren Schritt zum Speichern von Daten, die mit dem Programm verknüpft sind, in der Ferneinheit (6).

5. Verfahren gemäß einem der vorstehenden Ansprüche,
wobei eine Basisstation (9) die drahtlose Datenkommunikationsverbindung (13) mit dem Datennetzwerk koppelt.

6. Verfahren gemäß einem der vorstehenden Ansprüche,
wobei die drahtlose Verbindung (13) eine Nahbereichsfunkverbindung aufweist.

7. Verfahren gemäß einem der vorstehenden Ansprüche,
wobei die drahtlose Verbindung in einem Frequenzband arbeitet, das bei ungefähr 2,4 GHz liegt.

8. Verfahren gemäß einem der vorstehenden Ansprüche, das einen Transport von Datenpaketen aufweist.

9. Verfahren gemäß einem der vorstehenden Ansprüche,
wobei die drahtlose Verbindung (13) Frequenzsprünge einsetzt.

10. Verfahren gemäß Anspruch 8 und 9, wobei die Frequenz, die für die drahtlose Verbindung verwendet wird, zwischen aufeinanderfolgenden Datenpaketen der Paketdatenübertragung geändert wird.

11. Verfahren gemäß einem der vorstehenden Ansprüche,
wobei die drahtlose Verbindung auf einem Universalnahbereichsfunkverbindungsprotokoll basiert, das von der "Bluetooth^{™}, Special Interest Group" definiert wird.

12. Verfahren gemäß einem der vorstehenden Ansprüche,
wobei die über die drahtlose Verbindung transportierten Daten Steuerungsanweisungen für die Benutzereinrichtung (10) aufweisen.

13. Verfahren gemäß einem der vorstehenden Ansprüche,
wobei die Benutzereinrichtung (10) dem Benutzer eine Tonnachricht basierend auf von der Fernverwaltungseinheit transportierten Daten darstellt.

14. Verfahren gemäß einem der vorstehenden Ansprüche,
wobei die Benutzereinrichtung (10) dem Benutzer eine visuelle Nachricht basierend auf von der Fernverwaltungseinheit transportierten Daten darstellt.

15. Verfahren gemäß einem der vorstehenden Ansprüche,
wobei dem Benutzer von der Benutzereinrichtung (10) basierend auf von der Fernverwaltungseinheit transportierten Daten eine oder mehrere Fragen oder Aufgaben dargestellt werden.

16. Verfahren gemäß einem der vorstehenden Ansprüche, das einen Transport von Sprachnachrichten basierend auf dem Sprache-über-Internet-Protokoll (VOIP) aufweist.

17. Verfahren gemäß einem der vorstehenden Ansprüche,
wobei das Datennetzwerk (6) für seine Benutzer Breitbanddatentransportdienste bereitstellt.

18. Verfahren gemäß einem der vorstehenden Ansprüche,
wobei der Benutzer (14) die in einer Datenbank (7) der Fernverwaltungseinheit (4) gespeicherten Informationen modifiziert.

19. Verfahren gemäß einem der vorstehenden Ansprüche,
wobei Informationen, die mit einer Verwendung der Benutzereinrichtung verknüpft sind, in der Fernverwaltungseinheit gespeichert werden.

20. Verfahren gemäß einem der vorstehenden Ansprüche,
wobei die Benutzereinrichtung mit einem Spielzeug verknüpft ist.

21. Verfahren gemäß einem der vorstehenden Ansprüche,
wobei das Programm eines aus der folgenden Auswahl ist:
ein Bildungsprogramm; eine Spielshow; eine Dokumentation; ein Nachrichtenprogramm; ein Sportprogramm; ein Unterhaltungsprogramm; eine Komödie; ein Drama; ein Spielfilm; ein Kinderprogramm.

22. Verfahren gemäß Anspruch 1, wobei die Programmdarstellungseinrichtung von einem Programmsignalrundfunksystem mit dem Programmsignal versorgt wird.

## Revendications

1. Procédé pour présenter un programme pour un utilisateur (14) comprenant : la mémorisation d'informations personnelles d'utilisateurs individuels comprenant des intérêts/préférences personnels dans une unité de gestion à distance (4) mise en oeuvre et exécutée par un fournisseur de services indépendant ; la fourniture, à un dispositif de représentation de programme (1), d'un signal de programme ; la présentation du programme à un utilisateur sur la base du signal de programme en réponse à un événement prédéfini surveillé par l'unité de gestion à distance, le transport de données entre l'unité de gestion à distance et un dispositif d'utilisateur (10) respectif pouvant être mis en oeuvre par l'utilisateur pour entrer des informations pendant l'exécution du programme et la génération et la transmission d'un message à l'unité de gestion ; le transport s'effectuant sur un réseau de données (6) et une liaison de communication de données sans fil (13) entre le réseau de données et le dispositif d'utilisateur, dans lequel lesdites données sont associées au programme et transportées de l'unité de gestion à distance (4) vers le dispositif d'utilisateur (10) et lesdites données sont personnalisées sur la base desdites informations personnelles mémorisées pour l'utilisateur respectif ;
l'envoi d'une réponse à l'unité de gestion à distance par l'intermédiaire du dispositif d'utilisateur ; et la communication, de l'unité de gestion à distance à l'utilisateur respectif, d'une réaction à la réponse.

2. Procédé selon la revendication 1, dans lequel le dispositif d'utilisateur (10) comprend un contrôleur portable.

3. Procédé selon la revendication 1 ou la revendication 2, dans lequel le dispositif d'utilisateur (10) traite des paquets de données reçus de l'unité de gestion (6) ou devant être transportés vers celle-ci.

4. Procédé selon l'une quelconque des revendications précédentes, comprenant une étape supplémentaire de mémorisation de données qui sont associées au programme dans l'unité à distance (6).

5. Procédé selon l'une quelconque des revendications précédentes, dans lequel une station de base (9) interface la liaison de communication de données sans fil (13) avec le réseau de données.

6. Procédé selon l'une quelconque des revendications précédentes, dans lequel la liaison sans fil (13) comprend une liaison radio à faible portée.

7. Procédé selon l'une quelconque des revendications précédentes, dans lequel la liaison sans fil fonctionne dans une bande de fréquence d'environ 2,4 GHz.

8. Procédé selon l'une quelconque des revendications précédentes, comprenant le transport de paquets de données.

9. Procédé selon l'une quelconque des revendications précédentes, dans lequel la liaison sans fil (13) utilise un saut de fréquence.

10. Procédé selon les revendications 8 et 9, dans lequel la fréquence utilisée pour la liaison sans fil est modifiée entre les paquets de données subséquents de la transmission de données par paquets.

11. Procédé selon l'une quelconque des revendications précédentes, dans lequel la liaison sans fil est basée sur un protocole de liaison radio à faible portée universel défini par le groupe d'intérêt spécial Bluetooth^{™}.

12. Procédé selon l'une quelconque des revendications précédentes, dans lequel les données transportées sur la liaison sans fil comprennent des instructions de commande pour le dispositif d'utilisateur (10).

13. Procédé selon l'une quelconque des revendications précédentes, dans lequel le dispositif d'utilisateur (10) présente à l'utilisateur un message audio sur la base de données transportées à partir de l'unité de gestion à distance.

14. Procédé selon l'une quelconque des revendications précédentes, dans lequel le dispositif d'utilisateur (10) présente à l'utilisateur un message visuel sur la base de données transportées à partir de l'unité de gestion à distance.

15. Procédé selon l'une quelconque des revendications précédentes, dans lequel une ou plusieurs questions ou tâches sont présentées à l'utilisateur par le dispositif d'utilisateur (10) sur la base de données transportées à partir de l'unité de gestion à distance.

16. Procédé selon l'une quelconque des revendications précédentes, comprenant le transport de messages vocaux sur la base du protocole VOIP (voix sur Ip).

17. Procédé selon l'une quelconque des revendications précédentes, dans lequel le réseau de données (6) fournit des services de transport de données large bande pour les utilisateurs de celui-ci.

18. Procédé selon l'une quelconque des revendications précédentes, dans lequel l'utilisateur (14) modifie lesdites informations mémorisées dans une base de données (7) de l'unité de gestion à distance (4).

19. Procédé selon l'une quelconque des revendications précédentes, dans lequel des informations associées à l'utilisation du dispositif d'utilisateur sont mémorisées dans l'unité de gestion à distance.

20. Procédé selon l'une quelconque des revendications précédentes, dans lequel le dispositif d'utilisateur est associé à un jouet.

21. Procédé selon l'une quelconque des revendications précédentes, dans lequel le programme est l'un de la sélection suivante : un programme éducatif ; un jeu télévisé ; un documentaire ; un programme d'informations ; un programme sportif ; un programme de divertissement ; une comédie ; un drame ; un film ; un programme pour enfants.

22. Procédé selon la revendication 1, dans lequel le dispositif de représentation de programme est fourni avec le signal de programme par un système de diffusion de signal de programme.
